# EUROPÄISCHE PATENTSCHRIFT

(11) **EP 2 390 749 B1**
(45) Veröffentlichungstag und Bekanntmachung des Hinweises auf die Patenterteilung: **17.07.2013**
(21) Anmeldenummer: 11166847.1
(22) Anmeldetag: 20.05.2011
(51) Int. Cl.: G05D 23/02

(54) **Thermostatisches Dehnstoffarbeitselement**
Thermostatic actuator comprising expansion material
Actionneur thermostatique comprenant une matière extensible

(30) Priorität: 25.05.2010 DE 102010029285
(43) Veröffentlichungstag der Anmeldung: 30.11.2011
(73) Patentinhaber: Behr Thermot-tronik GmbH, 70806 Kornwestheim (DE)
(72) Erfinder: Auweder, Andreas, 71665 Vaihingen/Enz (DE); Buschatz, Immanuel, 72669 Unterensingen (DE)
(74) Vertreter: Grauel, Andreas

(56) Entgegenhaltungen:
- DD-A7- 289 677
- DE-A1- 2 461 041
- DE-U- 6 942 949
- DE-U1- 8 700 216
- US-A- 2 795 381

## Beschreibung

Die Erfindung betrifft ein Dehnstoffarbeitselement, insbesondere für einen Thermostateinsatz, mit einem Gehäuse, in welchem ein das Gehäuse abdichtendes Dichtelement angeordnet ist, wobei in dem Raum zwischen Gehäuse und Dichtelement eine Dehnstoffmischung eingebracht ist und das Dichtelement einen axial beweglichen Kolben aufnimmt, welcher durch ein Führungselement geführt ist, das das Gehäuse über dem Dichtelement verschließt.

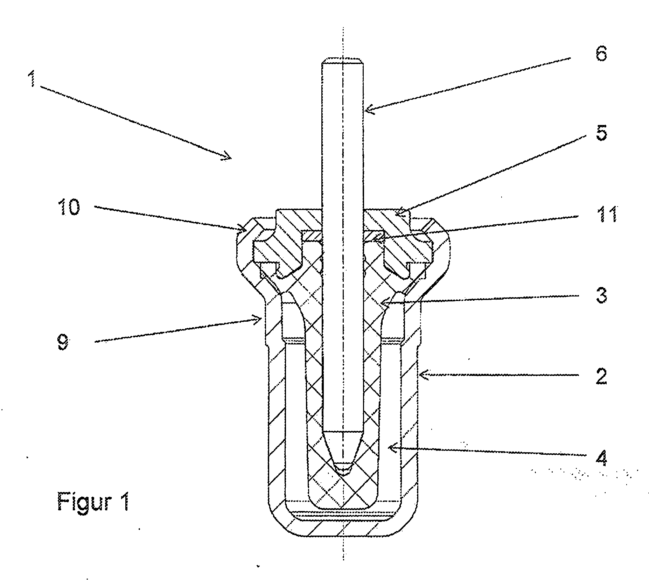

In Figur 1 ist ein bekanntes Dehnstoffarbeitselement 1 dargestellt, welches aus einem Gehäuse 2 besteht, dass aus unterschiedlichen Cu-Zn-Legierungen, Aluminium oder Edelstahl entweder tiefgezogen oder durch eine mechanische Bearbeitung hergestellt wird. Das Gehäuse 2 wird von einem Führungselement 5 abgeschlossen, welches zur Führung eines axial beweglichen Kolbens 6 vorgesehen ist. Der axial bewegliche Kolben 6 ist dabei als mechanisch bearbeitetes Drehteil ebenfalls aus einer Cu-Zn-Legierung, Aluminium oder Edelstahl hergestellt und als Stift oder gezogener Draht ausgebildet. Im Innenraum des Gehäuses 2 ist der Kolben 6 von einem Dichtelement 3, welches auch ein Gummieinsatz sein kann, umschlossen. Das Dichtelement 3 besteht dabei aus einem, an das jeweilige Anwendungsgebiet, zum Beispiel Temperatur oder Medium, angepassten Elastomerwerkstoff. Dieses Dichtelement 3 wird beispielsweise spritzgießtechnisch hergestellt. Das Innere des Gehäuses 2 ist zwischen dem Dichtelement 3 und dem Gehäuse 2 mit einer Dehnstoffmischung 4 ausgefüllt.

Zwischen dem Führungselement 5 und dem Dichtelement 3 ist eine Abstreif-Dichtscheibe 11 beispielsweise aus Teflon angeordnet. Diese Abstreif-Dichtscheibe 11 hat die Aufgabe, innen am axial beweglichen Kolben 6 ein Eindringen von Medien, zum Beispiel Kühlwasser, in das Dehnstoffarbeitselement 1 zu verhindern. Außerdem soll durch die Abstreif- Dichtscheibe 11 ein Ausbringen vom Medium aus dem Dehnstoffarbeitselement 1, zum Beispiel in Form von Fett für die Schmierung zwischen Kolben 6 und Dichtelement 3, unterbunden werden. Ein Eindringen von Medien in das Dehnstoffarbeitselement 1 verändert die thermostatische Funktion des Dehnstoffarbeitselementes 1 dahingehend, dass der Hub, welcher durch Ausdehnung der Dehnstoffmischung 4 in Folge von Temperaturänderungen erfolgt, und dem entsprechend die Öffnung eines Thermostateinsatzes, in welchen das Dehnstoffarbeitselement 1 eingesetzt ist, sich verändert. Beim Ausbringen von Medien, wie zum Beispiel Fett aus dem Dichtelement 3, besteht wiederrum die Gefahr, dass das Dichtelement 3 durch das fehlende Fett einem höheren Reibungsbeiwert ausgesetzt ist und dadurch früher zerstört wird.

Durch Aufsetzen des Führungselementes 5 auf das Gehäuse 2 und/oder das Dichtelement 3, wobei das Dichtelement 3 bereits mit der Abstreif-Dichtscheibe 11 abgeschlossen ist, wird eine geschlossene, druckfeste Dichteinheit hergestellt. Dabei wird das Dehnstoffarbeitselement 1 außen am Flansch des Gehäuses 2 von oben kraftschlüssig umbördelt oder vernietet. Aufgrund der Ausgestaltung des Gehäuses 2 mit einer sich trichterförmig aufweitenden, kegeligen Innenfläche, an welcher das Dichtelement 3 in Höhe des Flansches anliegt und das Gehäuse abdichtet, entsteht ein großer Flanschdurchmesser außen am Dehnstoffarbeitselement 1. Daraus resultiert, dass das Dehnstoffarbeitselement 1 allgemein sehr große räumliche Abmessungen aufweist, was beim Einbau in einen Kühlkreislauf, zum Beispiel eines Kraftfahrzeuges, entsprechend groß dimensionierte Einbaubedingungen voraussetzt.

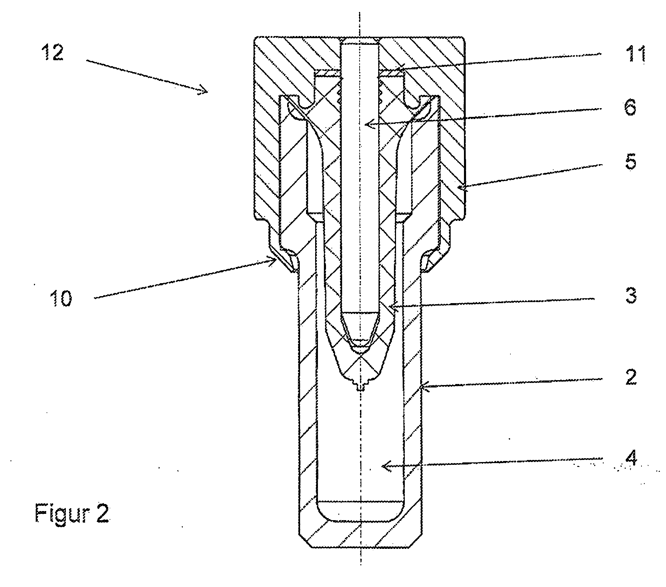

Im Unterschied zu Figur 1, wo eine kraftschlüssige Vernietung 10 des Gehäuses 2 so gestaltet ist, dass das Gehäuse 2 das Führungselement 5 umgreift, indem es einen etwa 45°-Winkel am Gehäuseende aufweist, welches um das Führungsteil 5 herum gebogen ist, ist in Figur 2 eine zweite Variante eines Dehnstoffarbeitselementes 12 dargestellt, welches ebenfalls bekannt ist. Auch bei diesem Dehnstoffarbeitselement 12 wird das Dichtelement 3 zusammen mit der Abstreif-Dichtscheibe 11 und dem Kolben 6 innen an die trichterförmig aufgeweitete, kegelige Innenfläche des Gehäuses 2 geführt, wobei das Gehäuse 2 bereits mit der erforderlichen Menge einer Dehnstoffmischung 4 befüllt ist. Die Abstreif-Dichtscheibe 11 übernimmt hier dieselbe Funktion, wie sie im Zusammenhang mit Figur 1 erläutert wurde. Anschließend wird das gedrehte bzw. mechanisch bearbeitete Führungselement 5 außen um das Gehäuse 2 und auf das Dichtelement 3 aufgesetzt, wobei die Abstreif-Dichtscheibe 11 auf dem Dichtelement 3 aufliegt. Anschließend wird ein geschlossenes, druckfestes Dehnstoffarbeitselement 12 dadurch gebildet, dass das den Flansch des Gehäuses 2 umgreifende Führungselement 5 unterhalb des Flansches des Gehäuses 2 kraftschlüssig umbördelt bzw. vernietet wird. Dabei umfasst das Führungselement 5 die Öffnung des Gehäuses 2 vollständig und schließt dieses somit ab.

Auch bei dieser zweiten Variante eines Dehnstoffarbeitselementes 12 ist eine trichterförmig aufgeweitete, kegelige Innenfläche am Innendurchmesser des Gehäuses 2 ausgearbeitet. Dadurch ergibt sich ein vergrößerter Außendurchmesser des Dehnstoffarbeitselementes 12, was den Materialeinsatz und die Kosten bei der Herstellung des Dehnstoffarbeitselementes erhöht. Weitere, auf das Gehäuse 2 aufbauende Bauteile müssen somit größer dimensioniert werden, wobei die Einbausituation für spätere Anwendungen entsprechend angepasst werden muss. Da die Befestigung des Führungselementes 5 durch Bördelung des Gehäuses 2 erfolgt, kann vor der Bearbeitung des Gehäuses 2 eine Wärmebehandlung dieses Gehäuses vorteilhaft sein, da bei der Verwendung von Cu-Zn-Legierungen für das Gehäuse 2 das Material eine erhöhte Sprödigkeit aufweist, weshalb es bei der Bördelung reißen könnte. Neben dem bereits betrachteten Nachteil einer allgemein größeren Bauweise sind unter Gesichtspunkten der Belastung dickere Wandstärken des Gehäuses 2 notwendig, wodurch sich das Gewicht des Dehnstoffarbeitselementes 12 erhöht.

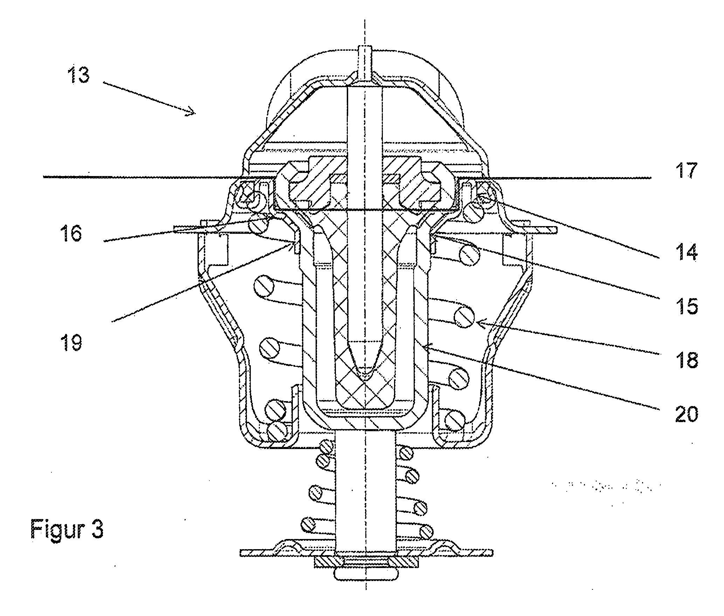

Ein Thermastafeinsatz 13, mit einem in Figur 1 beschriebenen Dehnstoffarbeitselement 1 ist in Figur 3 dargestellt. Ein Hauptteller 14 des Thermostateinsatzes 13 wird außen auf das Gehäuse 2 unterhalb der Umbördelung bzw. Vernietung angebracht. Am Rand des Haupttellers 14 ist ein Durchzug 19 ausgebildet, welcher auf den Durchzug 9 des Gehäuses 2 des Dehnstoffarbeitselementes 1 aufgesetzt und dort angepasst wird. Ein solcher Thermostateinsatz 13 wird in eine heiße Umgebung, wie durch heißes Kühlwasser o.ä. erzeugt, eingebracht, wobei die Dehnstoffmischung 4 des Dehnstoffarbeitselementes 2 sich unter den entsprechenden Temperaturbedingungen im Gehäuse 2 ausdehnt. Dies hat eine Längenänderung zur Folge, wobei sich der Hauptteller 14zusammen mit dem Gehäuse 2 entgegen der Hauptfederkraft einer Feder 18 bewegen, wodurch die Durchflussmenge des Kühlmediums durch den Thermostateinsatz 13 geändert wird. Beim Abkühlen des Kühlmediums zieht sich die Dehnstoffmischung 4 zusammen und die Rückstellkraft der Feder 18 drückt den Hauptteller 14 wieder in seine ursprüngliche Position.

Aus Figur 3 ist ersichtlich, dass die Trennlinie zwischen dem heißen Kühlmediüm und dem kalten Kühlmedium, welche mit der Bezugsziffer 17 gekennzeichnet ist, aufgrund der Gestaltung des Haupttellers 14 einen nicht geradlinigen Verlauf nimmt. Dies hat zur Folge, dass das Dehnstoffarbeitselement 1 mit der Dehnstoffmischung 4 nicht vollständig dem heißen Kühlmedium ausgesetzt ist, was sich nachteilig auf die Durchflussregelung des Kühlmediums auswirkt.

Durch die DE 69 42 949 ist Thermostat mit Dehnstoffgefülltem Fühler bekannt geworden, bei welchem ein Fühler mit spiraliger Rohrform gebildet ist.

Der Erfindung liegt die Aufgabe zu Grunde, ein Dehnstoffarbeitselement anzugeben, welches bei gleichbleibender Lebensdauer und identischer thermostatischer Funktion eine kleinere Bauweise aufweist und kostengünstiger herzustellen ist.

Erfindungsgemäß wird die Aufgabe dadurch gelöst, dass das Gehäuse eine nach innen gewölbte Fläche aufweiset, an welcher das Dichtelement abdichtend angeordnet ist und die Enden des Führungselements das Gehäuse umgreifen und in den Bund am Außenumfang des Gehäuses ragen, welcher durch die nach innen gewölbte Fläche gebildet ist. Durch die nach innen gewölbte Fläche wird die trichterförmig aufgeweitete, kegelige Innenfläche am Innendurchmesser des Gehäuses ersetzt. Damit wird ein kleinerer Außendurchmesser des Flansches des Gehäuses erzielt, was einen geringeren Materialeinsatz nach sich zieht. Die Verringerung des Materialeinsatzes reduziert die Kosten bei der Herstellung des Dehnstoffarbeitselementes. Des Weiteren können die auf das Gehäuse aufbauenden Bauteile, wie ein Dichtelement, dementsprechend kleiner gestaltet werden, was sich auch verkleinernd auf die Einbausituation auswirkt, welche bei späteren Anwendungen vorgehalten werden muss.

Vorteilhafterweise liegt das Dichtelement auf der nach innen gewölbten Fläche auf. Die nach innen gewölbte Fläche dient dabei als Tragelement für das Dichtelement. Auf weitere konstruktive Maßnahmen zur Befestigung des Dichtelementes an dem Gehäuse kann dadurch verzichtet werden, wodurch sich das Dehnstoffarbeitselement konstruktiv einfacher gestaltet.

In einer Ausgestaltung liegt das Führungselement auf dem Dichtelement und /oder dem Gehäuse auf und ist annähernd in Höhe der nach innen gewölbten Fläche mit dem Gehäuse mechanisch verbunden. Die nach innen gewölbte Fläche bildet eine äußere Ausnehmung an dem Gehäuse, die genutzt wird, um das Führungselement an dieser Stelle mechanisch zu befestigen und einen guten Abschluss für das Gehäuse zu erlangen. Der durch die nach innen gewölbte Fläche außen am Gehäuse entstandene Bund kann somit sowohl zum Halten des Führungselementes als auch von innen zum Tragen des Dichtelementes genutzt werden. Auf weitere konstruktive Maßnahmen kann verzichtet werden, was die Herstellung des Dehnstoffarbeitselementes vereinfacht.

In einer Weiterbildung ist das Führungselement an dem Gehäuse verbördelt oder verpresst oder vernietet. Da die mechanische Befestigung durch Bördelung an dem Führungselement und nicht an dem Gehäuse stattfindet, ist keine Wärmebehandlung des Gehäuses vor seiner Verarbeitung notwendig, wodurch der Heistellungsprozess des Dehnstoffarbeitselementes zeitlich verkürzt wird. Das Gehäuse kann dabei problemlos aus preisgünstigen Cu-Zn-Legierungen hergestellt werden.

In einer Variante ist das Führungselement als Stanzteil oder als fließgepresstes Teil ausgebildet. Da beim Stanzen eine Materialverdrängung stattfindet, wird der Teil des FÜhrungselementes, in weichem der Kolben geführt wird, bei gleich bleibendem Materialeinsatz verlängert, weshalb ein verbessertes Führungselement mit einer länger ausgeführten Führung bei gleich bleibenden Materialeinsatz und Kosten hergestellt wird. Außerdem handelt es sich bei einem Stanzteil um ein in der Massenfertigung einfach herzustellendes Erzeugnis, welches jederzeit beim Hersteller des Dehnstoffarbeitselementes selbst erzeugt werden kann.

In einer Weiterbildung ist das Führungselement aus Edelstahl gefertigt. Aufgrund der Ausbildung des Führungselementes aus Edelstahl, welches gestanzt bzw. fließgepresst hergestellt wird, ist bedingt durch die Materialauswahl und den Fertigungsprozess an diesem Bauteil keine Wärmebehandlung notwendig, da Edelstahl sich beim Vernieten bzw. Umbördeln besonders geschmeidig verhält, weshalb keine Risse im Material auftreten.

Ferner weist das Dichtelement auf seiner dem Kolben zugewandten Innenseite eine den Innendurchmesser des Dichtelementes verkleinernde Dichtlippe auf. Durch Verwendung dieser den Innendurchmesser verkleinernde Dichtlippe kann auf die Abstreif-Dichtscheibe verzichtet werden, Die Dichtlippe übernimmt dabei die Aufgabe, zu verhindern, dass Medien von außen in das Dehnstoffarbeitselement eindringen bzw. Fette, die zum Funktionieren des Dehnstoffarbeiselementes, insbesondere zur geringeren Reibung zwischen dem Dichtelement und dem Kolben, beitragen, nach außen an die Umgebung des Dehnstoffarbeitselementes abgegeben werden. Durch eine solche Komponentenreduzierung entfallen die Kosten für die beispielsweise aus Teflon bestehende Abstreif-Dichtscheibe genauso wie die Montagekosten für dieses Bauteil.

In einer Alternative weist das Führungselement auf seiner dem Kolben zugewandten Innenseite eine, den innendurchmesser des Führungselementes verkleinernde Dichtlippe auf. Eine Dichtlippe an dem Führungselement hat dabei dieselbe Wirkung wie die Dichtlippe am Dichtelement. Die Dichtlippe verhält sich abdichtend gegenüber dem Eindringen von Medien aus der Umgebung in das Dehnstoffarbeitselement, genauso wie es verhindert, dass Fette aus dem Dehnstoffarbeitselement an die Umgebung abgegeben werden, Auch eine solche Ausgestaltung ersetzt die Abstreif-Dichtscheibe, weshalb der Materialeinsatz reduziert und die Herstellungskosten auch in diesem Fall verringert werden.

In einer anderen Ausführungsform beträgt eine Wandstärke des Gehäuses annähernd einen Millimeter. Dünnere Wandstärken unterstreichen die kleinere kompaktere Bauweise des Dehnstoffarbeitselementes. Das Dehnstoffarbeitselement wird trotz gleichbleibender Belastung leichter. Der Wärmeaustausch zwischen Umgebung und Dehnstoffmischung wird bei identischem Material deutlich verbessert.

Vorteilhafterweise ist das Gehäuse aus Edelstahl hergestellt. Durch die Verwendung von Edelstahl wird die Lebensdauer des Dehnstoffarbeitselementes verlängert, da korrosive Angriffe der Medien aus der Umgebung des Dehnstoffarbeitselementes keine Einwirkungen an dem Gehäuse hinterlassen.

In einer Weiterbildung besteht der Kolben aus Kunststoff. Durch die Verwendung von Kunststoff wird ein sehr leichter Kolben hergestellt, welcher außerdem für eine Massenproduktion geeignet ist.

Ferner hängt die Menge der Dehnstoffmischung in dem Gehäuse von dem Durchmesser des Kolbens ab. Bei der Verwendung eines kleineren Kolbendurchmessers wird auch weniger Dehnstoffmischung notwendig, da für den gleichen Hub weniger Dehnstoffvolumen verdrängt werden muss. Dadurch reduziert sich die maximale Belastung des Dehnstoffarbeitselementes, da eine geringere wirksame Fläche am Kolben erforderlich wird.

In einer Variante ist unterhalb der nach innen gewölbten Fläche des Gehäuses ein Durchzug zur Aufnahme eines Haupttellers eines Thermostateinsatzes angeordnet. Dieser Durchzug wird beim Zusammenbau des Dehristoffarbeitselementes mit dem Thermostateinsatz mit einem Durchzug des Haupttellers zusammengefügt, wobei beide fest aneinander angeordnet werden. Der Durchzug des Dehnstoffarbeitselementes hat dabei eine passgenaue Abmessung, welcher der Abmessung des Haupttellers entspricht.

Ein erfindungsgemäßer Thermostateinsatz umfasst ein in dieser Schutzrechtsanmeldung beschriebenes Dehnstoffarbeitselement. Durch die Anwendung des in seinen Abmaßen verkleinerten Dehnstoffarbeitselementes verringert sich auch der Aufbau des Thermostateinsatzes in seinen Abmaßen, so dass der Thermostatemsatz wesentlich kleiner und kompakter ausgeführt werden kann. Dabei ist es bei einem anderen Ausführungsbeispiel vorteilhaft, wenn der Durchfluss vom Durchmesser des Haupttellers abhängig ist.

Vorteilhafterweise ist ein Hauptteller des Thermostateinsatzes an dem Führungselement des Dehnstoffarbeitselementes befestigt. Da der Hauptteller am äußeren Umfang des Führungselementes und somit oberhalb der mechanischen Verankerung befestigt ist, entfällt eine Passung am Umfang des Gehäuses für die Haupttelleraufnahme und somit der sonst notwendige Durchzug, wodurch das Gehäuse weiter in seiner Herstellung verbilligt wird. Die Höhenbegrenzung der kompletten Einbausituation des Haupttellers erfolgt weiterhin über die mäßlich stets definierte Umbördelung bzw. Vernietung. Auch am Hauptteller des Thermostateinsatzes entfällt der Durchzug, was zu einer Materialeinsparung führt.

Da das Führungselement während der Umbördelung bzw. Vernietung am Dehnstoffarbeitselement außen am kompletten Durchmesser für das Aufpressen bzw. Aufziehen des Haupttellers gehalten wird, tritt kein Maßverzug an dem Außendurchmesser des Dehnstoffsarbeitselementes auf. Ein weiterer Vorteil bei dieser Haupttelleranordnung besteht darin, dass der Hauptteller vorteilhaft für die exakte Temperierung des Dehnstoffarbeitselementes ausgebildet ist, da eine Trennung zwischen kaltem und heißem Medium in einem linearen, vorzugsweise waagerechten, Bereich in der Höhe des Haupttellers erfolgt. Da das Dehnstoffarbeitselement mit seinem Flansch nicht in das kalte Medium eindringt, wird der Einfluss des kalten Mediums auf das Dehnstoffarbeitselement sehr gering gehalten. Die Dehnstoffmischung ist bei solchen Thermostatesnsätzen vollständig dem heißen Medium ausgesetzt, so dass der Öffnungsbeginn des Dehnstoffarbeitselementes bei der richtigen Temperatur der Wärmeübertragung auf das Dehnstoffarbeitselement erfolgt. Eine Verschiebung des Öffnungsbeginns des Dehnstoffarbeitselementes auf eine höhere Temperatur durch den Einfluss vom kalten Medium infolge einer Wärmeübertragung in das Dehnstoffarbeilselement wird somit sicher verhindert.

Die Erfindung lässt zahlreiche Ausführungsformen zu. Eine davon soll anhand der in der Figur dargestellten Zeichnungen näher erläutert werden.

Es zeigt:
- Fig. 1:: eine erste Variante eines Dehnstoffarbeitselementes nach dem Stand der Technik,
- Fig. 2:: eine zweite Variante des Dehnstoffarbeitselementes nach dem Stand der Technik,
- Fig. 3:: Thermostateinsatz mit der ersten Variante des Dehnstoffarbeitselementes nach dem Stand der Technik,
- Fig. 4:: eine Ausführungsform des erfindungsgemäßen Dehnstoffarbeitselementes,
- Fig. 5:: Thermostateinsatz mit dem Dehnstoffarbeitselement nach Fig. 4.

Gleiche Merkmale sind mit gleichem Bezugszeichen gekennzeichnet.

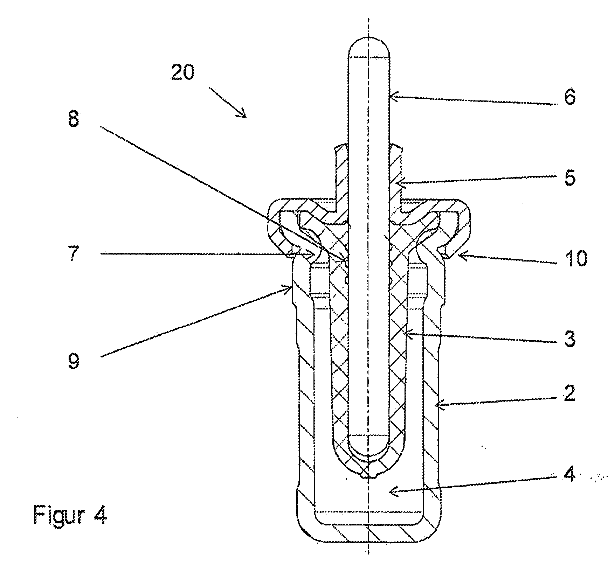

In Figur 4 ist ein Dehnstoffarbeitselement 20 dargestellt, welches eine nach innen gewölbte Dichtungsauflage aufweist. Dieses Dehnstoffarbeitselement 20 umfasst ein Gehäuse 2, welches mit einer Dehnstoffmischung 4 gefüllt ist. Des Weiteren nimmt das Gehäuse 2 ein Dichtelement 3 auf, welches als Gummieinsatz ausgebildet ist. Das Dichtelement 3 umfasst eine Öffnung, in welcher ein Kolben 6, der auch als Stift bezeichnet wird, eingefügt ist und in das Dichtelement 3 hineinragt. Das Dichtelement 3 liegt mit seinen Enden, welche dem Gehäuseausgang zugeordnet sind, dicht auf einer Fläche 7 auf, welche im Gehäuse 2 nach innen gewölbt ist und außen am Gehäuse 2 einen Bund bildet.

Das Gehäuse 2 und das Dichtelement 3 werden durch ein Führungselement 5 abgeschlossen. Das Führungselement 5 umgibt ebenfalls den Kolben 6, welcher axial in dem Dichtelement 3 und in dem Führungselement 5 verschieblich gelagert ist. Die Enden des Führungselementes 5 umgreifen das Gehäuse 2 und ragen in den Bund am Außenumfang des Gehäuses 2, welcher durch die nach innen gewölbte Fläche 7 gebildet ist. An dieser Stelle erfolgt eine Verbördelung 10 bzw. eine Vernietung des Führungselementes 5, so dass das Gehäuse 2 dicht gegen die Umgebung des Dehnstoffarbeitselementes 20 abgeschlossen ist.

An seinem Innendurchmesser weist das Dichtelement 3 gegenüber liegend zum Kolben 6 eine Dichtlippe 8 auf. Diese Dichtlippe 8 wird bei der Herstellung des Dichtelementes 3 in Spritzgießtechnik zwangsentformt, was bedeutet, dass die Dichtlippe 8 als Hinterschnitt hergestellt wird. Die Dichtlippe 8 hat einerseits die Funktion, ein Eindringen von Medien von außerhalb aus der Umgebung des Dehnstoffarbeitselementes 20 in das Dehnstoffarbeitselement 20 selbst zu verhindern. Andererseits soll das Austreten eines Mediums, wie beispielsweise eines Schmierfettes, aus dem Dohnstoffarbeitselement 20 unterbunden werden. Unterhalb der Verbördelung 10 des Führungselementes 5 an dem durch die nach innen gewölbte Fläche 7 gebildeten Bund ist ein Durchzug 9 am Gehäuse 2 als Passmaß für eine Verpressung eines Haupttellers 14 eines Thermostateinsatzes 13 vorgesehen.

Der Durchzug 9 ist dabei umlaufend um das zylinderförmig ausgebildete Gehäuse 2 geführt Das Gehäuse 2 kann dabei aus unterschiedlichen Materialien, wie Cu-Zn-Legierungen. Aluminium oder Edelstahl, bestehen und ist entweder tiefgezogen oder mechanisch bearbeitet hergestellt, wie gedreht oder fließgepresst. Die nach innen gewölbte Fläche 7, die gleichzeitig als Dichtfläche des Gehäuses 2 für das Dichtelement 3 dient, wird bereits im jeweiligen Fertigungsprozess des Gehäuses eingearbeitet. Das Führungselement 5 zur Führung des axial beweglichen Kolbens 6 kann als gestanztes oder fließgepresstes Bauteil ebenfalls in unterschiedlichen Materialien, wie Cu-Zn-Legierungen, Aluminium oder Edelstahl hergestellt werden. Das als Gummieinsatz ausgebildete Dichtelement 3 besteht aus einem Elastomewerkstorf, das dem jeweiligen Anwendungsbereich wie Temperatur oder Medium angepasst ist. Vorteilhafterweise wird es in einer Spritzgießtechnik hergestellt.

Die den Innendurchmesser verkleinernde zwangsentformte Dichtlippe 8, die zum axial beweglichen Kolben 6 hin angeordnet ist, verhindert ein Eindringen von kalten Medium in das Dehnstoffarbeitselement 20. Ein Eindringen von einem kalten Medium würde die thermostatische Funktion des Dehnstoffarbeitselementes 20 verschieben, so dass der Hub des Haupttellers 14 des Thermostateinsatzes 13 bei definierter Temperatur ansteigen würde und dementsprechend der Öffnungsbeginn des Thermostateinsatzes 13, welcher im weiteren noch näher beschrieben wird, verändert wird.

Beim Ausbringen von Fetten aus dem Dehnstoffarbeitselement 20, was ebenfalls durch die Dichtlippe 8 unterbunden wird, besteht die Gefahr, dass das Dichtelement 3 durch das fehlende Fett einem höheren Reibungsbeiwert ausgesetzt und dadurch früher zerstört wird.

Der Kolben 6 besteht aus Edelstahl und ist durch eine mechanische Bearbeitung, beispielsweise gedreht oder durch einen gezogenen Draht, hergestellt. Er kann aber auch aus Kunststoff gebildet sein, wobei der Kolben 6 in einem Spritzgussverfahren hergestellt wird. Die Dehnstoffmischung 4, welche die thermostatische Funktion des Dehnstoffarbeitselementes 20 primär ausführt, besteht aus einer Wachsmischung, die Kohlenwasserstoffe enthält. Die Wachsmischung unterliegt bei einer Temperaturerhöhung von außen einem Phasenwechsel vom festen Aggregatzustand in den flüssigen Aggregatzustand, Die im Wachs enthaltenen Kohlenwasserstoffe erfahren dabei über einen bestimmten Temperaturbereich eine Volumenausdehnung. So wird bei einer Temperaturänderung von z.B. 15 Kelvin ein Hub von z.B. 8 mm des Haupttellers 14 erreicht.

Der Zusammenbau des Dehnstoffarbeitselementes 20 erfolgt über die Einführung des Dichtelementes 3 mit der am Innendurchmesser kleineren, zwangsentformten Dichtlippe 8, die oben an dem Dichtungselement 3 angeordnet ist und die dem axial beweglichen Kolben 6 zugeneigt ist, in das Gehäuse 2. Das Gehäuse 2 ist zu diesem Zeitpunkt bereits mit der Dehnstoffmischung 4 gefüllt. Ist der Kolben 6 in das Dichtelement 3 eingefügt, wird anschließend das Führungselement 5 von außen auf das Gehäuse 2 und auf das Dichtelement 3 aufgesetzt. Abschließend wird, um das Dehnstoffarbeitselement 20 als geschlossene, druckfeste Dichteinheit auszubilden, außen am Flansch das Führungselement 5 in der Höhe der nach innen gewölbten Fläche 7 des Gehäuses 2 kraftschlüssig umbördelt oder vernietet.

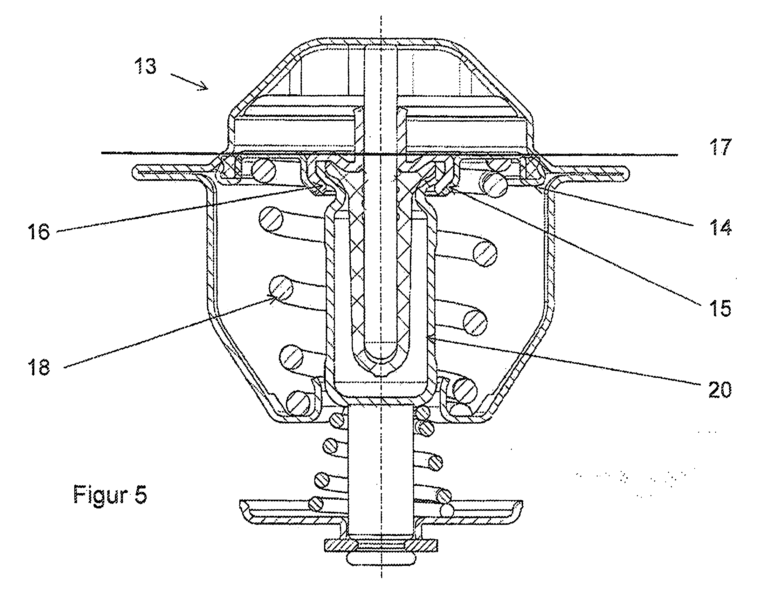

Figur 5 zeigt einen Thermostateinsatz 13 mit dem im Zusammenhang mit Figur 4 beschriebenen Dehnstoffarbettselement 20. Ein Hauptteller 14 des Thermostateinsatzes 13 ist dabei am Führungselement 5 des Dehnstoffarbeitselementes 20 befestigt. Der Hauptteller 14 wird zur Leckageverhinderung für den Anschluss an einen nicht weiter dargestellten Kühlkreislauf auf dem Führungselement 5 oberhalb der Umbördelung bzw. Vernietung 10 aufgepresst bzw. aufgezogen. Dabei erfolgt die Höhenbegrenzung der kompletten Einbausituation des Haupttellers 14 über die maßlich stets definierte Umbördelung bzw. Vernietung 10 außen am Bördelrand des Führungselementes 5.

Das Thermostatelement 13 ist beispielsweise in einen Verbrennungsmotor eines Kraftfahrzeuges, insbesondere dort z.B. an den Zylinderkopf, baut, wo es den Kühlkreislauf für den Verbrennungsmotor regelt. Das in dem Kühlkreislauf enthaltene Kühlmedium umfließt den heißen Verbrennungsmotor und nimmt die Motortemperatur auf. Das so erhitzte Kühlmedium wird an den Thermostateinsatz 13 geführt und umspült diesen. Wie aus Figur 5 ersichtlich, ragt das Dehnstoffarbeitselement 20 vollständig mit der gesamten Dehnstoffmischung 4 in das von dem Verbrennungsmotor erhitzte heiße Kühlmedium ein. Durch die so zugeführte Temperatur dehnt sich die Dehnstoffmischung 4 innerhalb des Dehnstoffarbeitselementes 20 aus, wodurch sich der Hauptteller 14 entgegen der Druckkraft der Feder 18 bewegt und dabei einen Durchfluss des heißen Kühlmediums zum kalten Kühlmedium freigibt, wobei das heiße Kühledium abgekühlt wird.

Wie in Figur 5 dargestellt, bildet die Trennlinie 17 zwischen heißem Kühlmedium und kaltem Kühlmedium bei dem vorliegenden Ausfuhrungsbeispiel der Erfindung eine gerade Linie, da durch die Befestigung des Haupttellers 14 an dem Führungselement 5 die Hauptteller 14 wesentlich einfacher gestaltet ist.

Der Vorteil des außen auf das Führungselement 5 aufgepressten bzw. aufgezogenen Haupttellers 14 besteht darin, dass der Hauptteller 14 einfacher ausgeführt werden kann, da hierzu kein weiterer Durchzug 19 an dem Hauptteller 14 notwendig ist. Der Hauptteller 14 lässt sich somit leichter und auch billiger, z.B. als Stanzteil, ausbilden, da der Materialeinsatz durch den Wegfall des Durchzuges geringer ist. Beim Umbördeln bzw. Vernieten muss das Führungselement 5 jedoch am Flanschdurchmesser außen fixiert werden. Diese Fixierung wird gleichzeitig zum Aufpressen bzw. Aufziehen des Haupttellers 14 genutzt. Dabei entfällt am Gehäuse 2 durch diese Maßnahme der Durchzug 9 für das Aufpressen des Haupttellers, was wiederum zu einer kostengünstigeren Variante des Gehäuses 2 führt. Der Hauptteller 14 ist vorteilhaft für die exakte Temperierung des Dehnstoffarbeitselementes 20 ausgebildet, da eine Trennung zwischen kaltem, und heißem Kühlmedium durch die konstruktive Gestaltung des Haupttellers 14 exakt eingestellt wird. Der Einfluss des kalten Kühlmediums auf das Dehnstoffarbeitselement 20 ist somit sehr gering. Ein veränderter Öffnungsbeginn des Dehnstoffarbeitselementes 20 durch den Einfluss des kalten Kühlmediums infolge einer Wärmeübertragung auf das Dehnstoffarbeitselement 20 entfällt.

## Patentansprüche

1. Dehnstoffarbeitselement, insbesondere für einen Thermostateinsatz, mit einem Gehäuse (2), in welchem ein, das Gehäuse (2) abdichtendes Dichtelement (3) angeordnet ist, wobei in dem Raum zwischen Gehäuse (2) und Dichtelement (3) eine Dehnstoffmischung (4) eingebracht ist und das Dichtelement (3) einen axial beweglichen Kolben (6) aufnimmt, welcher durch ein Führungselement (5) geführt ist, das das Gehäuse (2) über dem Dichtelement (3) verschließt, **dadurch gekennzeichnet, dass** das Gehäuse (2) eine nach innen gewölbte Fläche (7) aufweist, an welcher das Dichtelement (3) abdichtend angeordnet ist und die Enden des Führungselements das Gehäuse umgreifen und in den Bund am Außenumfang des Gehäuses ragen, welcher durch die nach innen gewölbte Fläche (7) gebildet ist.

2. Dehnstoffarbeitselement nach Anspruch 1, **dadurch gekennzeichnet, dass** des Dichtelement (3) auf der nach innen gewölbten Fläche (7) aufliegt.

3. Dehnstoffarbeitselement nach Anspruch 1 oder 2, **dadurch gekennzeichnet, dass** das Führungselement (5) auf dem Dichtelement (3) und dem Gehäuse (2) aufliegt und annähernd in Höhe der nach innen gewölbten Fläche (7) mit dem Gehäuse (2) mechanisch verbunden ist.

4. Dehnstoffarbeitselement nach Anspruch 3, **dadurch gekennzeichnet, dass** das Führungselement (5) an dem Gehäuse (2) verbördelt oder verpresst oder vernietet ist.

5. Dehnstoffarbeitselement nach Anspruch 1, 3 oder 4, **dadurch gekennzeichnet, dass** das Führungselement (5) als Stanzteil oder als fließgepresstes Teil ausgebildet ist.

6. Dehnstoffarbeitselement nach Anspruch 5, **dadurch gekennzeichnet, dass** das Führungselement (5) aus Edelstahl gefertigt ist.

7. Dehnstoffarbeitselement nach mindestens einem der vorhergehenden Ansprüche, **dadurch gekennzeichnet, dass** das Dichtelement (3) auf seiner, dem Kolben (6) zugewandten Innenseite eine den Innendurchmesser des Dichtelementes (3) verkleinernde Dichtlippe (8) aufweist.

8. Dehnstoffarbeitselement nach mindestens einem der vorhergehenden Ansprüche 1 bis 6, **dadurch gekennzeichnet, dass** das Führungselement (5) auf seiner, dem Kolben zugewandten Innenseite eine, den Innendurchmesser des Führungselementes (5) verkleinernde Dichtlippe aufweist.

9. Dehnstoffarbeitselement nach mindestens einen der vorhergehenden Ansprüche, **dadurch gekennzeichnet, dass** eine Wandstärke des Gehäuses (2) annähernd 1 mm beträgt.

10. Dehnstoffarbeitselement nach Anspruch 9, **dadurch gekennzeichnet, dass** das Gehäuse (2) aus Edelstahl besteht.

11. Dehnstoffarbeitselement nach mindestens einem der Ansprüche 1 oder 8, **dadurch gekennzeichnet, dass** der Kolben (6) aus Kunststoff besteht.

12. Dehnstoffarbeitselement nach einem der Ansprüche 1, 8 oder 11, **dadurch gekennzeichnet, dass** die Menge der Dehnstoffmischung (4) in dem Gehäuse (2) von dem Durchmesser des Kolbens (6) abhängt.

13. Dehnstoffarbeitselement nach mindestens einem der vorhergehenden Ansprüche, **dadurch gekennzeichnet, dass** unterhalb der nach innen gewölbten Fläche (7) des Gehäuses (2) ein Durchzug (9) zur Aufnahme eines Haupttellers (14) eines Thermostateinsatzes (13) angeordnet ist.

14. Thermostateinsatz, **dadurch gekennzeichnet, dass** der Thermostateinsatz (13) ein Dehnstoffarbeitselement (20) nach mindestens einem der vorhergehenden Ansprüche 1 bis 13 aufweist.

15. Thermostateinsatz nach Anspruch 14, **dadurch gekennzeichnet, dass** der Hauptteller (14) des Thermostateinsatzes (13) an dem Führungselement (5) des Dehnstoffarbeitselementes (1) befestigt ist.

## Claims

1. An expandable actuator, in particular for a thermostat insert, comprising a housing (2), in which a seal element (3) sealing the housing (2) is arranged, wherein an expandable mixture (4) is introduced in the space between the housing (2) and the seal element (3) and the seal element (3) receives an axially movable piston (6), which is guided by a guide element (5), which closes the housing (2) via the seal element (3), **characterised in that** the housing (2) has an inwardly curved surface (7), on which the seal element (3) is sealingly arranged, and the ends of the guide element engage around the housing and protrude into the collar on the outer periphery of the housing, said collar being formed by the inwardly curved surface (7).

2. The expandable actuator according to claim 1, **characterised in that** the seal element (3) bears against the inwardly curved surface (7).

3. The expandable actuator according to claim 1 or 2, **characterised in that** the guide element (5) bears against the seal element (3) and the housing (2) and is mechanically connected to the housing (2) approximately at the height of the inwardly curved surface (7).

4. The expandable actuator according to claim 3, **characterised in that** the guide element (5) is flanged, or pressed or riveted on the housing (2).

5. The expandable actuator according to claim 1, 3 or 4, **characterised in that** the guide element (5) is formed as a stamped part or as an extruded part.

6. The expandable actuator according to claim 5, **characterised in that** the guide element (5) is manufactured from stainless steel.

7. The expandable actuator according to at least one of the preceding claims, **characterised in that** the seal element (3), on its inner side facing the piston (6), comprises a sealing lip (8) reducing the inner diameter of the seal element (3).

8. The expandable actuator according to at least one of the preceding claims 1 to 6, **characterised in that** the guide element (5), on its inner side facing the piston, comprises a sealing lip reducing the inner diameter of the guide element (5).

9. The expandable actuator according to at least one of the preceding claims, **characterised in that** a wall thickness of the housing (2) is approximately 1 mm.

10. The expandable actuator according to claim 9, **characterised in that** the housing (2) consists of stainless steel.

11. The expandable actuator according to at least one of claims 1 or 8, **characterised in that** the piston (6) consists of plastic.

12. The expandable actuator according to one of claims 1, 8 or 11, **characterised in that** the quantity of expandable mixture (4) in the housing (2) is dependent on the diameter of the piston (6).

13. The expandable actuator according to at least one of the preceding claims, **characterised in that** an aperture (9) for receiving a main plate (14) of a thermostat insert (13) is arranged beneath the inwardly curved surface (7) of the housing (2).

14. A thermostat insert, **characterised in that** the thermostat insert (13) comprises an expandable actuator (20) according to at least one of the preceding claims 1 to 13.

15. The thermostat insert according to claim 14, **characterised in that** the main plate (14) of the thermostat insert (13) is fastened on the guide element (5) of the expandable actuator (1).

## Revendications

1. Elément de travail en matière extensible, en particulier pour un insert de thermostat, comprenant un boîtier (2) dans lequel est disposé un élément d'étanchéité (3) assurant l'étanchéité du boîtier (2), où est introduit, dans l'espace compris entre le boîtier (2) et l'élément d'étanchéité (3), un mélange de matière extensible (4), et l'élément d'étanchéité (3) loge un piston (6) mobile axialement, piston qui est guidé par un élément de guidage (5) qui ferme le boîtier (2) au-dessus de l'élément d'étanchéité (3), **caractérisé en ce que** le boîtier (2) présente une surface (7) bombée vers l'intérieur, surface sur laquelle est disposé l'élément d'étanchéité (3) assurant l'étanchéité, et les extrémités de l'élément de guidage entourent le boîtier et s'engagent dans le collet situé sur la circonférence extérieure du boîtier, collet qui est formé par la surface (7) bombée vers l'intérieur.

2. Elément de travail en matière extensible selon la revendication 1, **caractérisé en ce que** l'élément d'étanchéité (3) est en appui sur la surface (7) bombée vers l'intérieur.

3. Elément de travail en matière extensible selon la revendication 1 ou 2, **caractérisé en ce que** l'élément de guidage (5) est en appui sur l'élément d'étanchéité (3) et sur le boîtier (2) et, à peu près à la hauteur de la surface (7) bombée vers l'intérieur, est relié mécaniquement au boîtier (2).

4. Elément de travail en matière extensible selon la revendication 3, **caractérisé en ce que** l'élément de guidage (5) est serti ou pressé ou rivé sur le boîtier (2).

5. Elément de travail en matière extensible selon la revendication 1, 3 ou 4, **caractérisé en ce que** l'élément de guidage (5) est configuré comme une pièce découpée ou comme une pièce filée à la presse.

6. Elément de travail en matière extensible selon la revendication 5, **caractérisé en ce que** l'élément de guidage (5) est fabriqué dans un acier spécial.

7. Elément de travail en matière extensible selon au moins l'une quelconque des revendications précédentes, **caractérisé en ce que** l'élément d'étanchéité (3) présente, sur son côté intérieur tourné vers le piston (6), une lèvre d'étanchéité (8) diminuant le diamètre intérieur de l'élément d'étanchéité (3).

8. Elément de travail en matière extensible selon au moins l'une quelconque des revendications précédentes 1 à 6, **caractérisé en ce que** l'élément de guidage (5) présente, sur son côté intérieur tourné vers le piston, une lèvre d'étanchéité diminuant le diamètre intérieur de l'élément de guidage (5).

9. Elément de travail en matière extensible selon au moins l'une quelconque des revendications précédentes, **caractérisé en ce qu'**une épaisseur de paroi du boîtier (2) est à peu près de 1 mm.

10. Elément de travail en matière extensible selon la revendication 9, **caractérisé en ce que** le boîtier (2) est en acier spécial.

11. Elément de travail en matière extensible selon au moins l'une des revendications 1 ou 8, **caractérisé en ce que** le piston (6) est en matière plastique.

12. Elément de travail en matière extensible selon l'une quelconque des revendications 1, 8 ou 11, **caractérisé en ce que** la quantité de mélange de matière extensible (4), dans le boîtier (2), dépend du diamètre du piston (6).

13. Elément de travail en matière extensible selon au moins l'une quelconque des revendications précédentes, **caractérisé en ce qu'**un passage (9) servant au logement d'un disque principal (14) d'un insert de thermostat (13) est disposé au-dessous de la surface (7) - bombée vers l'intérieur - du boîtier (2).

14. Insert de thermostat **caractérisé en ce que** l'insert de thermostat (13) présente un élément de travail en matière extensible (20) selon au moins l'une quelconque des revendications précédentes 1 à 13.

15. Insert de thermostat selon la revendication 14, **caractérisé en ce que** le disque principal (14) de l'insert de thermostat (13) est fixé sur l'élément de guidage (5) de l'élément de travail en matière extensible (1).
